Europäisches Patentamt

European Patent Office

Office européen des brevets

(19)

(11) **EP 1 176 739 A1**

(12) **EUROPEAN PATENT APPLICATION**
published in accordance with Art. 158(3) EPC

(43) Date of publication:
　　**30.01.2002　Bulletin 2002/05**

(51) Int Cl.⁷: **H04B 7/26**

(21) Application number: **01906346.0**

(86) International application number:
　　**PCT/JP01/01458**

(22) Date of filing: **27.02.2001**

(87) International publication number:
　　**WO 01/67639 (13.09.2001 Gazette 2001/37)**

(84) Designated Contracting States:
　　**AT BE CH CY DE DK ES FI FR GB GR IE IT LI LU
　　MC NL PT SE TR**
　　Designated Extension States:
　　**AL LT LV MK RO SI**

(30) Priority: **06.03.2000　JP 2000060155**

(71) Applicant: **MATSUSHITA ELECTRIC INDUSTRIAL
　　CO., LTD.
　　Kadoma-shi, Osaka 571-8501 (JP)**

(72) Inventors:
　　• **KITADE, Takashi
　　　Yokosuka-shi, Kanagawa 239-0847 (JP)**
　　• **HAYASHI, Masaki
　　　Yokosuka-shi, Kanagawa 239-0847 (JP)**

(74) Representative:
　　**Grünecker, Kinkeldey, Stockmair &
　　Schwanhäusser Anwaltssozietät
　　Maximilianstrasse 58
　　80538 München (DE)**

(54) **TRANSMITTING APPARATUS AND TRANSMITTING METHOD**

(57)　Transmit power determining section 100 determines a transmit power value based on the condition of the propagation path estimated from a propagation loss and the number of times the random access channel signal is retransmitted. Midamble pattern determining section 103 determines a midamble pattern corresponding to the transmit power value from among a plurality of midamble patterns. Time multiplexing section 102 creates a transmission signal by multiplexing transmission data subjected to spreading processing and the midamble pattern. Radio section 104 applies predetermined transmission processing to the transmission signal generated and transmits the transmission signal subjected to the transmission processing above using the determined transmit power value as a random access channel signal.

FIG.8

## Description

Technical Field

The present invention relates to a communication apparatus that cancels interference using matrix calculations in a CDMA (Code Division Multiple Access) based communication, and more particularly, to a communication apparatus that cancels interference during a random access communication.

Background Art

One of conventional methods of extracting a demodulated signal by eliminating various kinds of interference such as interference due to multi-path fading, inter-symbol interference and multiple access interference is an interference signal elimination method using Joint Detection (hereinafter referred to as "JD"). This JD is disclosed in the "zero Forcing and Minimum Mean-Square-Error Equalization for Multiuser Detection in Code-Division Multiple-Access Channels" (Klein A., Kaleh G.K., Baier P.W., IEEE Trans . Vehicular Technology, vol.45, pp.276-287, 1996.).

This interference signal elimination method using JD is also used for a random access communication carried out when a mobile station apparatus starts to communicate with a base station apparatus.

The conventional interference signal elimination method using JD will be explained below taking a case where a mobile station apparatus carries out a random access communication with a base station apparatus as an example.

In a random access communication, the mobile station apparatus that attempts to start a communication sends a signal for requesting the start of a communication via a random access channel ("RACH") to the base station apparatus first. In this transmission, the mobile station apparatus also sends a known reference signal called "midamble code". For convenience of explanations, the signal sent by the mobile station apparatus through the random access channel is called a "RACH signal".

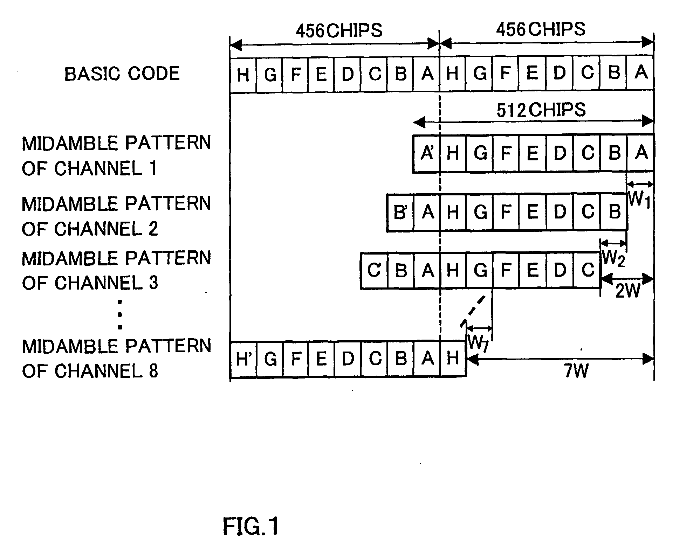

The pattern of a midamble code (hereinafter referred to as "midamble pattern") is created as follows. FIG.1 is a schematic view showing a method of creating a midamble pattern in a conventional CDMA communication system.

As shown in FIG.1, the midamble pattern used for each mobile station apparatus (each channel) is created using a basic code that is repeated a cycle of 456 (=8W) chips following the procedure shown below. This basic code is known to the base station apparatus and includes 8 blocks A to H made up of mutually different codes each having a length of W (=57) chips.

As a first step, a reference block is set for the basic code above. Here, suppose the reference block is "A". As a second step, the phase of the reference block above is shifted leftward in the figure by {W x (n-1)} for every channel. Here, W=57 chips and n is a channel number. As a third step, for every channel in the basic code above, 512 chips are extracted from the leading section of the reference block whose phase has been shifted in the second step. In this way, a midamble pattern with a length of 512 chips as a whole is created for every channel.

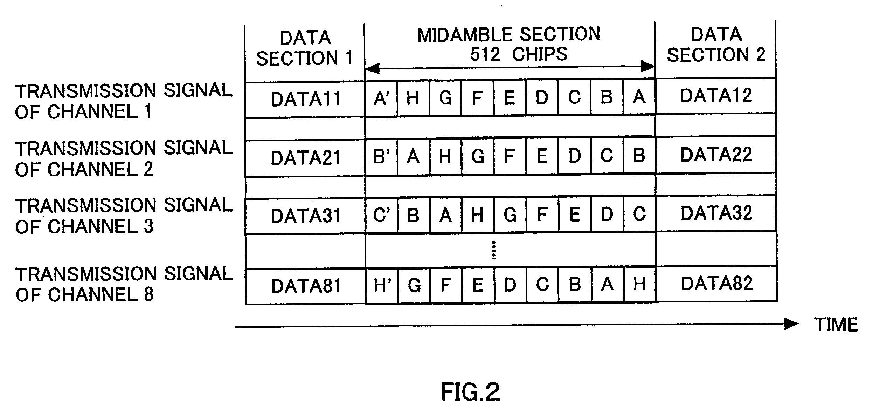

The mobile station apparatus transmits an RACH signal shown in FIG.2 using any one of midamble patterns created as shown above. FIG. 2 is a schematic view showing transmission timing of each mobile station apparatus in a conventional CDMA communication system.

As shown in FIG.2, each mobile station apparatus transmits a transmission signal with a midamble code inserted between data section 1 and data section 2. The signal transmitted by data section 1 or data section 2 corresponds to a signal requesting for the start of a communication as described above. This signal transmits, for example, an ID number of a mobile station apparatus. In FIG.2, the transmission signals of channels 1 to 8 correspond to the RACH signals transmitted by mobile station apparatuses 1 to 8, respectively.

Then, processing by the base station apparatus that has received the RACH signals will be explained with reference to FIG.3 to FIG.5. FIG.3 is a schematic view conceptually showing a first example of a situation in which a base station apparatus in a conventional CDMA communication system receives an RACH signal from each mobile station apparatus. FIG.4 is a block diagram showing a configuration of a base station apparatus to which a conventional interference signal elimination method using JD is applied. FIG.5 is a schematic view showing a first example of a delay profile obtained by the base station apparatus to which the conventional interference signal elimination method using JD is applied.

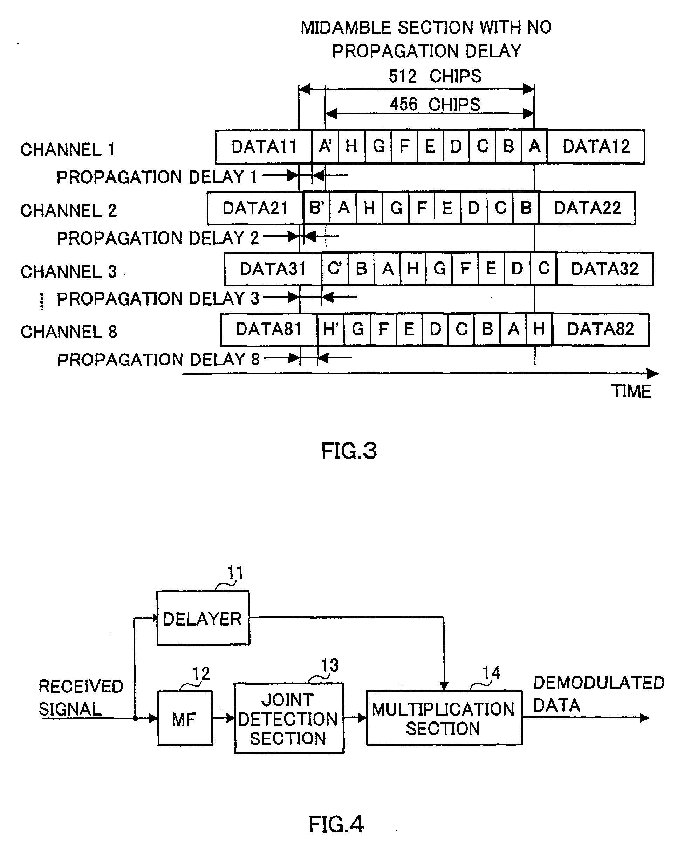

Each mobile station apparatus is located at a certain distance from the base station apparatus and the distance between each mobile station apparatus and the base station apparatus varies from one mobile station apparatus to another. Thus, as shown in FIG.3, a propagation delay is produced by the time an RACH signal sent from each mobile station apparatus arrives at the base station apparatus, which produces variations in propagation delays among the mobile station apparatuses. That is, propagation delays produced until the RACH signals sent from mobile station apparatuses 1, 2, 3, ···, 8 arrive at the base station are propagation delays 1, 2, 3, ···, 8, respectively. The signal received by the base station apparatus is a signal resulting from multiplexing the RACH signals from the respective mobile station apparatuses with the respective propagation delays shown in FIG.3.

The base station apparatus carries out the following processing to extract data for each mobile station apparatus by eliminating interference such as interference caused by multi-path fading, inter-symbol interference and multiple access interference.

According to FIG.4, the received signal resulting from multiplexing the RACH signals sent from the respective mobile station apparatuses is subjected to predetermined radio processing such as frequency conversion and then sent to delay section 11 and matched filter (MF) 12. Delay section 11 delays the received signal by a predetermined time and sends the delayed signal to multiplier 14, which will be described later.

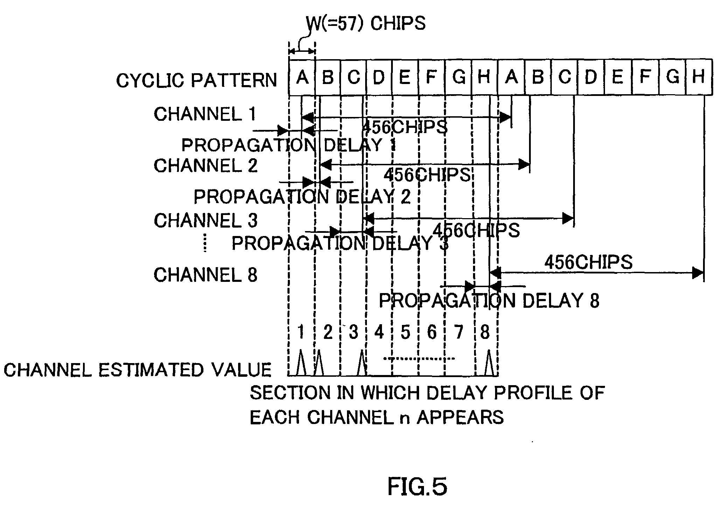

Matched filter 12 carries out correlation value calculation processing using the midamble code section and the above-described cyclic basic code in the received signal and thereby calculates a channel estimated value corresponding to each mobile station apparatus. Furthermore, applying a power calculation to the calculated channel estimated values gives delay profiles as shown in FIG.5. According to FIG.5, when a propagation delay of each mobile station apparatus is smaller than a W-chip length, the section in which a delay profile appears is determined for each mobile station apparatus. That is, in the above case, the delay profiles corresponding to mobile station apparatuses 1 to 8 appear in sections 1 to 8 each having a length of W chips (hereinafter referred to as "W-chip section").

According to FIG.4, the channel estimated values of the respective mobile station apparatuses calculated by matched filter 12 are sent to joint detection (hereinafter referred to as "JD") section 13.

JD section 13 performs the following matrix calculations using the channel estimated values of the respective mobile station apparatuses. That is, by carrying out convolutional calculations between the channel estimated values of the respective mobile station apparatuses and spreading codes applied to data sections assigned to the respective mobile station apparatuses, convolutional calculation results (matrix) for the respective mobile station apparatuses are obtained. Through these calculations, a matrix is obtained in which the convolutional calculation results of the respective mobile station apparatuses are regularly placed (hereinafter referred to as "system matrix"). Here, for convenience of explanations, the system matrix is expressed as [A].

Further, by carrying out a matrix calculation using the system matrix as shown in the following expression, matrix [B] is obtained.

$$[B] = (\,[A]^H \cdot [A]\,)^{-1} \cdot [A]^H \qquad \text{①}$$

where $[A]^H$ is a conjugate transposed matrix of the system matrix and $(\,[A]^H \cdot [A]\,)^{-1}$ is an inverse matrix of $[A]^H \cdot [A]$.

Matrix [B] obtained from such a matrix calculation is sent to multiplication section 14.

Multiplication section 14 carries out multiplication processing (that is, interference elimination demodulation processing) between the data section of the received signal from delay section 11 and the matrix from JD section 13 and obtains data stripped of interference for the respective mobile station apparatuses. Thus, the base station apparatus recognizes ID numbers of the mobile station apparatuses that have requested for the start of a communication and thereby accepts these mobile station apparatuses as the mobile station apparatuses with which to communicate.

After such a random access communication, the base station apparatus sends a signal indicating that these mobile station apparatuses have been accepted via a forward access channel (FACH). For convenience of explanations, a signal sent by the base station apparatus via a forward access channel is called an "FACH signal".

Each mobile station apparatus that has sent an RACH signal can recognize whether the communication request has been accepted by the base station apparatus or not by checking the content of the received FACH signal. The mobile station apparatus whose communication request has been accepted performs a normal communication with the base station apparatus. The mobile station apparatus whose communication request has not been accepted performs a random access communication again.

However, in the above-described conventional interference signal elimination method using JD, as the radius of a cell increases, an RACH signal sent from a mobile station apparatus farther from the base station apparatus has a greater propagation delay, and therefore the sum of the propagation delay and delay variance of this RACH signal may exceed the W-chip length. In this case, the delay profile corresponding to the above mobile station apparatus does not appear in an expected W-chip section as shown in FIG.5, but appears in another W-chip section.

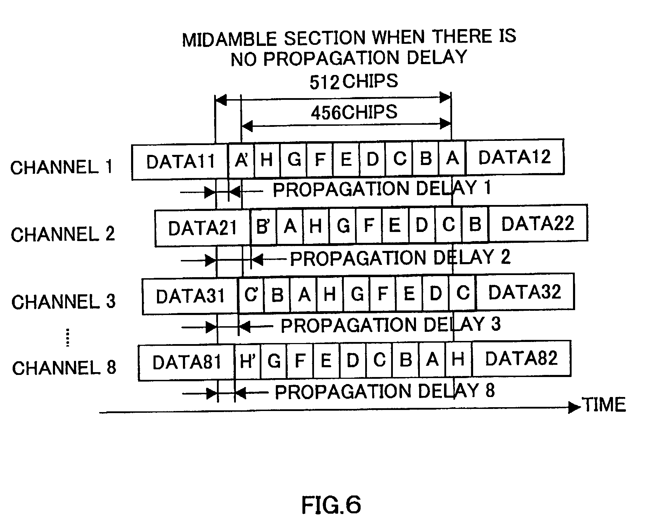

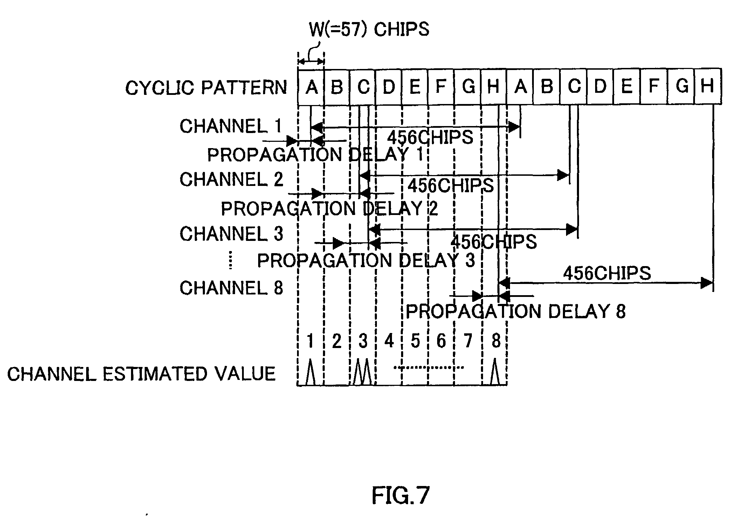

This case will be explained with reference to FIG.6 and FIG.7. FIG. 6 is a schematic view conceptually showing a second example of a situation in which a conventional base station apparatus based on a CDMA communication system receives an RACH signal from each mobile station apparatus. FIG.7 is a schematic view showing a second example of delay profiles obtained from a base station apparatus to which a conventional interference signal elimination method using JD is applied. Here, suppose a propagation delay of an RACH signal sent from mobile station apparatus 2 (channel 2) is greater than the W-chip length.

Since mobile station apparatus 2 is located far from the base station apparatus, the propagation delay of the RACH signal sent from mobile station apparatus 2 is large as shown in FIG.6. For this reason, the propagation delay corresponding to mobile station apparatus 2 is greater than the W-chip length as shown in FIG. 7. As a result, the delay profile corresponding to mobile station apparatus 2 does not appear in the expected W-chip section (that is, W-chip section "2"). The delay profile corresponding to mobile station apparatus 2 may appear another W-chip section (that is, for example, W-chip section "3").

As described above, delay profiles obtained by the base station apparatus corresponding to mobile station apparatuses located far from the base station apparatus do not appear in expected W-chip sections, and therefore it is not possible to calculate channel estimated values corresponding to the above mobile station apparatuses. Furthermore, the delay profiles corresponding to the above mobile station apparatuses appear in W-chip sections corresponding to other mobile station apparatuses, causing the channel estimated values corresponding to the other mobile station apparatuses to become inaccurate.

As a result, the result of the matrix calculation carried out by above-described JD section 13 (see FIG. 4) becomes inaccurate, deteriorating the characteristic of the interference elimination demodulation processing of multiplication section 14 degrades. Thus, the base station apparatus cannot perform demodulation for the user who is so distant that the propagation delay is greater than W chips. Thus, the base station apparatus may be unable to recognize not only the ID number of the above mobile station apparatus but also the ID numbers of other mobile station apparatuses, making it impossible to accept these mobile station apparatuses as the mobile station apparatuses with which to communicate.

As shown above, according to the conventional interference signal elimination method using JD, when a mobile station apparatus located in a place where the sum of a propagation delay and delay variance exceeds the W-chip length carries out random access, not only this mobile station apparatus but also other mobile station apparatuses carrying out random access communication are unlikely to be accepted by the base station apparatus.

In the case where the base station apparatus sends a control command for adjusting the transmission timing of each mobile station apparatus taking into account a propagation delay to each mobile station apparatus using the downlink, the delay profile corresponding to each mobile station apparatus will appear in the expected W-chip section. However, a random access communication is a kind of communication whereby each mobile station apparatus sends an RACH signal to the base station apparatus before the base station apparatus carries out transmission to each mobile station apparatus using an individual downlink. Therefore, in a random access communication, the base station apparatus cannot control the transmission timing of each mobile station apparatus .

As a measure to prevent this problem, there is a method of increasing the width of the W-chip section by increasing phase W to be shifted in the first step above. However, according to this method, the number of users (number of communication terminal apparatuses) who can be accommodated through matrix calculations using JD will be reduced on condition that the midamble length is fixed. Increasing the length of a midamble makes it possible to increase the width of the W section without changing the number of users who can be accommodated, but since the proportion of the midamble section in the entire RACH signal increases, which results in a decrease of the transmission capacity.

Disclosure of Invention

It is an object of the present invention to provide a transmission apparatus capable of improving the probability of successful random access communications without affecting the number of communication terminal apparatuses that can be accommodated and transmission capacity.

First, in view that the condition of a propagation path differs from one communication terminal apparatus to another and that a propagation delay of a communication terminal apparatus that has sent an RACH signal via a propagation path with a small propagation loss is small, while a propagation delay of a communication terminal apparatus that has sent an RACH signal via a propagation path with a large propagation loss is large, the present inventor et al. has come up with the present invention by discovering that assigning a known reference signal which will reduce the length of a delay profile that can be created to a communication terminal apparatus with a small propagation loss and assigning a known reference signal which will increase the length of a delay profile that can be created to a communication terminal apparatus with a large propagation loss will increase the probability that the delay profile corresponding to each communication terminal apparatus will appear in an expected section without increasing the proportion of the known reference signal section in the communication format.

Second, in view that a communication terminal apparatus fails in a random access communication because the delay profile corresponding to this communication terminal apparatus does not appear in the expected section, the present inventor et al. has come up with the present invention by discovering that assigning a known reference signal with a longer delay profile than the previous one to this communication terminal apparatus will increase the probability that the delay profile corresponding to this communication terminal apparatus will appear in the expected section.

The object of the present invention is attained by setting a known reference signal to be assigned to each communication terminal apparatus based on at least one of the condition of a propagation path and the number of times the random access channel signal is retransmitted. Furthermore, the object of the present invention is attained by controlling not only a known reference signal to be assigned to each communication terminal apparatus but also a transmit power value of the random access channel signal of each communication terminal apparatus based on at least one of the propagation path condition and the number of times the random access channel signal is retransmitted.

Brief Description of Drawings

FIG.1 is a schematic view showing a method of creating midamble patterns in a conventional CDMA communication system;

FIG.2 is a schematic view showing transmission timing of each mobile station apparatus in a conventional CDMA communication system;

FIG.3 is a schematic view conceptually showing a first example of a situation in which a base station apparatus in a conventional CDMA communication system receives an RACH signal from each mobile station apparatus;

FIG.4 is a block diagram showing a configuration of a base station apparatus to which a conventional interference signal elimination method using JD is applied;

FIG.5 is a schematic view showing a first example of delay profiles obtained by the base station apparatus to which the conventional interference signal elimination method using JD is applied;

FIG.6 is a schematic view conceptually showing a second example of a situation in which the conventional base station apparatus based on a CDMA communication system receives an RACH signal from each mobile station apparatus;

FIG.7 is a schematic view showing a second example of delay profiles obtained from the base station apparatus to which the conventional interference signal elimination method using JD is applied;

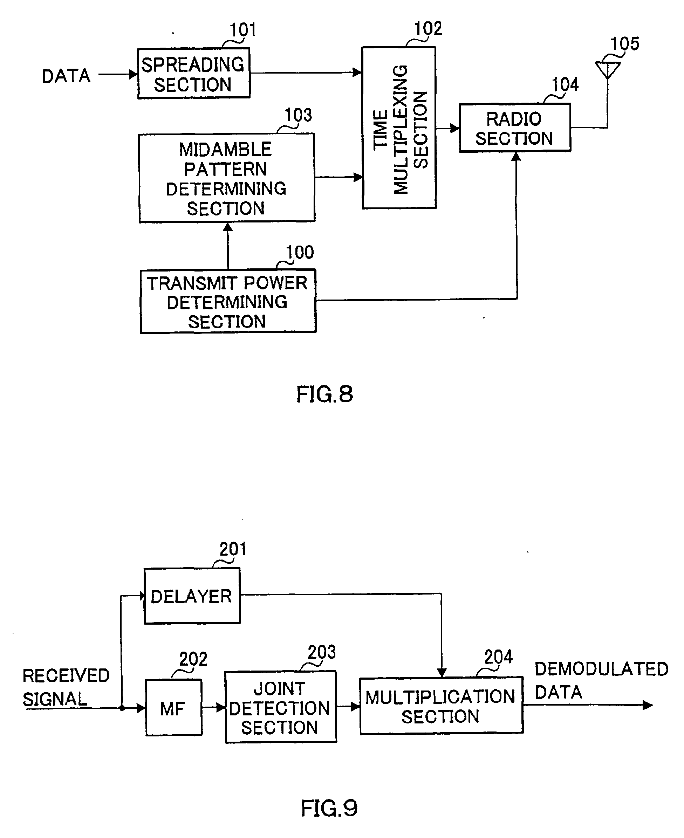

FIG.8 is a block diagram showing a configuration of a mobile station apparatus equipped with a transmission apparatus according to Embodiment 1 of the present invention;

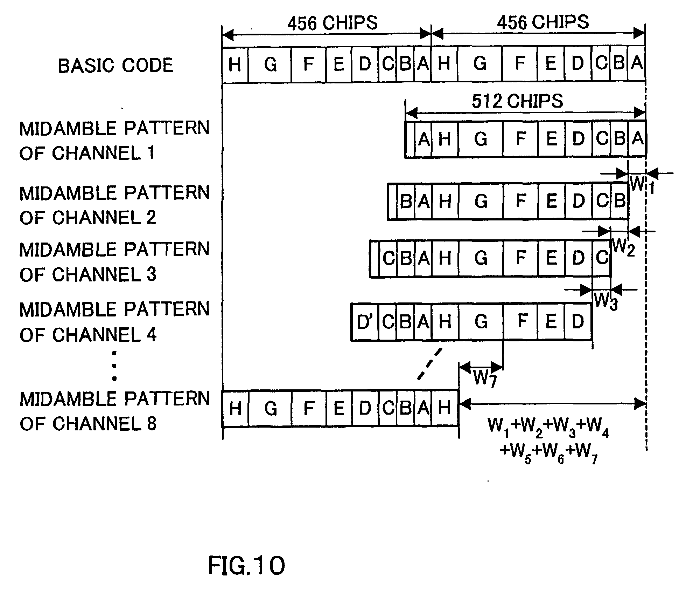

FIG.9 is a block diagram showing a configuration of a base station apparatus equipped with a reception apparatus according to Embodiment 1 of the present invention;

FIG.10 is a schematic view showing a procedure for creating midamble patterns used for the mobile station apparatus equipped with the transmission apparatus according to Embodiment 1 above;

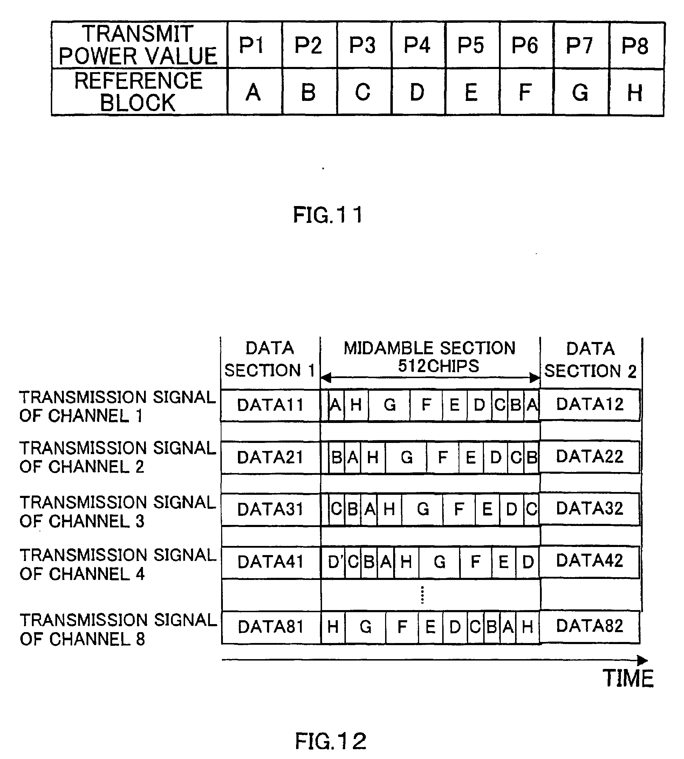

FIG.11 is a table used by a midamble pattern determining section in the mobile station apparatus equipped with the transmission apparatus according to Embodiment 1 above;

FIG.12 is a schematic view showing transmission timing of the mobile station apparatus equipped with the transmission apparatus according to Embodiment 1 above;

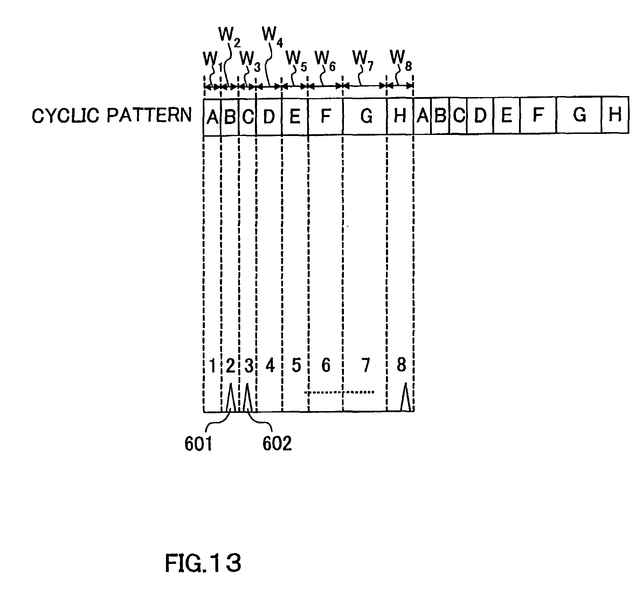

FIG.13 is a schematic view showing an example of delay profiles created by the base station apparatus equipped with the reception apparatus according to Embodiment 1 above;

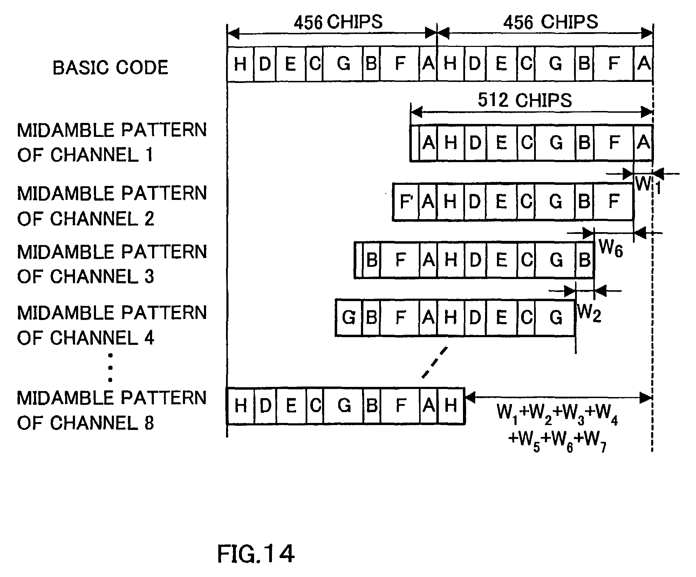

FIG.14 is a schematic view showing a procedure for creating midamble patterns used for a mobile station apparatus equipped with a transmission apparatus according to Embodiment 2 of the present invention;

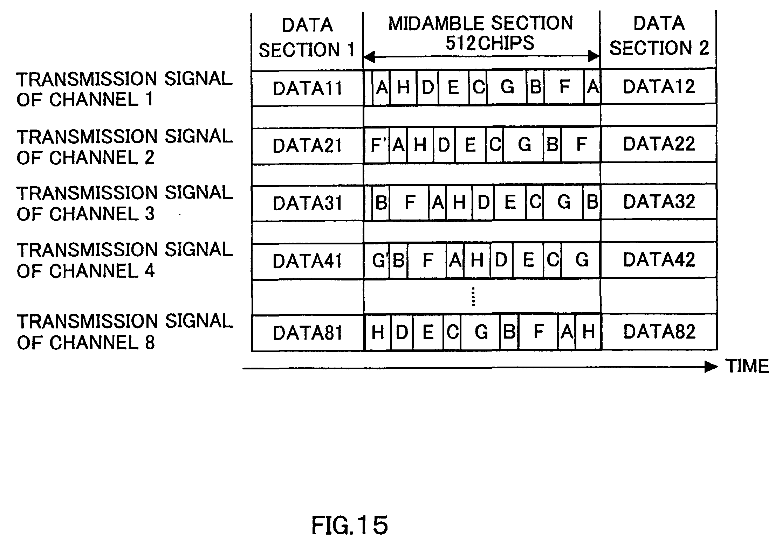

FIG.15 is a schematic view showing transmission timing of the mobile station apparatus equipped with the transmission apparatus according to Embodiment 2 above; and

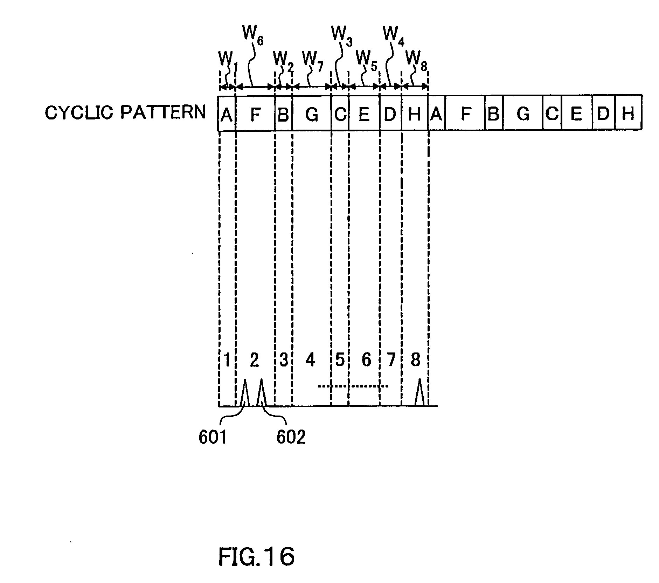

FIG.16 is a schematic view showing an example of delay profiles created by a base station apparatus equipped with a reception apparatus according to Embodiment 2 above.

Best Mode for Carrying out the Invention

With reference now to the attached drawings, embodiments of the present invention will be explained in detail below.

(Embodiment 1)

FIG.8 is a block diagram showing a configuration of a mobile station apparatus equipped with a transmission apparatus according to Embodiment 1 of the present invention. In FIG.8, transmit power determining section 100 calculates a propagation loss between this mobile station apparatus and a base station apparatus using a signal transmitted through an information channel (hereinafter referred to as "information channel signal"). Furthermore, transmit power determining section 100 determines a transmit power value of an RACH signal according to the calculated propagation loss and the number of times the RACH signal is retransmitted. The determined transmit power value is sent to midamble pattern determining section 103 and radio section 104.

Spreading section 101 performs spreading processing on the transmission data using a spreading code assigned to this mobile station apparatus. This transmission data corresponds to data subjected to predetermined modulation processing, for example, the ID number of this mobile station apparatus. The transmission data subjected to spreading processing is sent to time multiplexing section 102.

Midamble pattern determining section 103 selects any one of a plurality of midamble patterns provided based on the transmit power value determined by transmit power determining section 100 and sends to time multiplexing section 102. The midamble pattern is a known reference signal used for channel estimation at the base station apparatus that receives the signal sent by this mobile station apparatus . Details of the midamble pattern will be explained later.

Time multiplexing section 102 creates a transmission signal by multiplexing the midamble pattern from midamble pattern determining section 103 and the transmission data subjected to spreading processing on a frame. As a frame format, as in the case of the frame format shown in FIG.2, the format including data section 1, midamble section and data section 2 is used. The midamble section is the part in which a midamble pattern is inserted.

Radio section 104 carries out predetermined processing such as frequency conversion on the transmission signal created by time multiplexing section 102 and sends the transmission signal subjected to the above-described predetermined processing as an RACH signal via antenna 105. During this transmission, radio section 104 transmits the RACH signal using the transmit power value determined by transmit power determining section 100.

FIG.9 is a block diagram showing a configuration of the base station apparatus equipped with a reception apparatus according to Embodiment 1 of the present invention. In FIG.9, the signal received (received signal) via an antenna (not shown) is subjected to predetermined radio processing such as frequency conversion and sent to delay section 201 and matched filter (MF) 202. This received signal is mainly a signal with the RACH signals sent from a plurality of mobile station apparatuses multiplexed on a same frequency band. Furthermore, the above-described plurality of mobile station apparatuses each has the configuration shown in FIG.8.

Delay section 201 delays the received signal by a predetermined time and sends the delayed received signal to multiplication section 204. Matched filter 202 performs correlation value calculation processing using the midamble code section in the received signal and a known basic code to calculate a channel estimated value for each mobile station apparatus. JD section 203 performs a matrix calculation using the channel estimated value from matched filter 202 and sends the matrix calculation result to multiplication section 204. Multiplication section 204 performs interference elimination demodulation processing using the received signal from delay section 201 and the matrix calculation result from JD section 203.

Then, the method of creating a midamble pattern to be assigned to each mobile station apparatus will be explained with reference to FIG.10. In this embodiment, suppose the total number of midamble patterns is 8 as an example. FIG.10 is a schematic view showing a procedure for creating midamble patterns used for a mobile station apparatus equipped with a transmission apparatus according to Embodiment 1 of the present invention. As shown in FIG.10, a midamble pattern used for each mobile station apparatus (each channel) is created using a basic code that is repeated in a cycle of 456 chips (=8W) according to the following procedure.

This basic code includes 8 blocks "A" to "H" with mutually different codes and chip lengths (code lengths) and is known to the base station apparatus shown in FIG.9. Furthermore, the chip length of each block is set to increase in the ascending order of A to G. Here, H is assumed to have a length of 57 chips. More specifically, this basic code contains a plurality of codes formed by a plurality of blocks with mutually different codes and code lengths sequentially arranged according to the code length (here, codes "A", "B" to "G" "H" in a length of 456 chips).

As a first step, a reference block is set in the above-described basic code. Here, the reference block is assumed to be "A" as an example. As a second step, the phase of the above-described reference block is shifted leftward in the figure by 0, W1, W1+W2, ⋯, W1+W2+ ⋯+W5+W6, , W1+W2, W6+W7 (W1<W2<⋯<W6<W7) for the respective channels (channels 1, 2, 3, ⋯, 7, 8). In this way, reference blocks of the respective channels (channels 1, 2, 3, ⋯, 7, 8) are "A", "B", "C", ⋯, "G", "H".

As a third step, for every channel in the basic code above, 512 chips are extracted from the leading section of the reference block whose phase has been shifted in the second step. Thus, a midamble pattern of 512 chips as a whole is created for each channel. FIG. 10 shows midamble patterns of channels 1, 2, 3, 4 and 8.

Then, operations in a random access communication of the mobile station apparatus equipped with the transmission apparatus in the above configuration and the base station apparatus equipped with the reception apparatus in the above configuration will be explained. First, an operation of the mobile station apparatus equipped with the transmission apparatus according to this embodiment will be explained.

When power to the mobile station apparatus shown in FIG.8 is turned on, transmit power determining section 100 calculates a propagation loss between the mobile station apparatus and the base station apparatus using an information channel signal sent from the base station apparatus shown in FIG. 9 based on the transmit power value of the information channel signal at the base station apparatus and the receive power value of an information channel signal at the mobile station apparatus.

The calculated propagation loss becomes an index to indicate the condition of the propagation path. When propagation loss is large, the distance between the mobile station apparatus and the base station apparatus may be large or even if the distance between the mobile station apparatus and the base station apparatus is small, radio waves may be attenuating due to reflections by obstacles or buildings, etc.

Furthermore, transmit power determining section 100 determines the transmit power value of the RACH signal based on the calculated propagation loss and the number of times the RACH signal is retransmitted.

More specifically, by adding an offset value according to the number of retransmissions to a preset basic value, a new basic value is calculated. Then, by adding a propagation loss to the basic value calculated in this way, a transmit power value is determined. Thus, as the propagation loss or the number of retransmissions increases, the transmit power value determined increases.

For example, in the case where the number of retransmissions of an RACH signal is 0 (that is, when a random access communication is performed for the first time), a value obtained by adding a propagation loss to the basic value becomes the transmit power value. When the number of retransmissions of the RACH signal is 1, a value obtained by adding an offset value to the basic value becomes a new basic value and a value obtained by adding a propagation loss to this basic value becomes a transmit power value. As the number of retransmissions further increases, the basic value increases and the transmit power value of the RACH signal increases. At this time, as the propagation loss increases, the transmit power value further increases. The determined transmit power value is sent to midamble pattern determining section 103 and radio section 104.

Midamble determining section 103 selects a midamble pattern based on the transmit power value determined by transmit power determining section 100. The method of selecting a midamble pattern will be explained with reference to FIG.11. FIG.11 shows a table used by midamble pattern determining section 103 at a mobile station apparatus equipped with the transmission apparatus according to Embodiment 1 of the present invention. In FIG.11, the "transmit power value" field shows transmit power values (P1 to P8 (P1<P2<···<P8<··· <P7)) determined by transmit power determining section 100 and the "reference block" field shows reference blocks (A to H) in the midamble patterns corresponding to these transmit power values. This reference block corresponds to the reference block set in the second step when a midamble pattern is created.

First, a reference block corresponding to the transmit power value determined by transmit power determining section 100 is selected using the table shown in FIG.11. Then, the midamble pattern having the selected reference block at the leading section thereof is selected as the midamble pattern to be inserted into this RACH signal. For example, in the case where the transmit power value is "P3", "C" is selected as the reference block, and therefore the "midamble pattern of channel 3" shown in FIG.10 is selected as the midamble pattern.

Here, in view that the chip length of the reference block corresponds to the length of the W-chip section of a delay profile created by the base station apparatus, the transmit power value and reference block in the table shown in FIG.11 are set as follows. That is, the W-chip section of the delay profile is set to be greater than a propagation delay which is estimated to occur when the RACH signal propagates through a propagation path estimated from a propagation loss, and any one of the reference blocks having a length equal to or greater than this W-chip section is selected.

According to this selection method, when a propagation loss between the mobile station apparatus and the base station apparatus is large or when the number of retransmissions of the RACH signal is large, a midamble pattern including a reference block with a large chip length is selected. On the contrary, when the propagation loss between the mobile station apparatus and the base station apparatus is small or when the number of retransmissions of the RACH signal is small, a midamble pattern including a reference block with a small chip length is selected. The midamble pattern selected as shown above is sent to time multiplexing section 102.

In time multiplexing section 102, the transmission data subjected to spreading processing and midamble patterns are multiplexed on frames, for example, as shown in FIG.12 to create transmission signals. FIG.12 is a schematic view showing transmission timing of mobile station apparatuses equipped with the transmission apparatus according to Embodiment 1 of the present invention.

That is, the transmission data subjected to spreading processing is inserted into the data section (here, data section 1 and data section 2) on the frames shown in FIG.12 and the midamble patterns are inserted into the midamble sections (512-chip sections) on the above-described frames to create transmission signals. The frames here are just shown by way of example and it is possible to change the positions of the midamble section and data sections as appropriate.

Radio section 104 performs predetermined transmission processing such as frequency conversion on the transmission signal created by time multiplexing section 102. Furthermore, the transmission signal subjected to the predetermined transmission processing above is sent as RACH signals from antenna 105. During this transmission, the transmit power value of the RACH signal is controlled to a transmit power value determined. by transmit power determining section 100.

The mobile station apparatus shown in FIG.8 sends the RACH signal requesting for the start of a communication in this way. After this, the mobile station apparatus monitors an FACH signal sent from the base station apparatus shown in FIG. 9 to check whether this FACH signal includes the ID number of the mobile station apparatus or not. When the request for a communication is accepted by the base station apparatus (the ID number of the mobile station apparatus is included in the FACH signal), the mobile station apparatus starts a normal communication with the base station apparatus. On the contrary, when the request for a communication is not accepted by the base station apparatus (the ID number of the mobile station apparatus is not included in the FACH signal), the mobile station apparatus resends the RACH signal. This completes the explanation about how the mobile station apparatus equipped with the transmission apparatus according to this embodiment operates.

Then, an operation of the base station apparatus equipped with the reception apparatus according to this embodiment will be explained with reference to FIG. 9. A received signal is sent to delay section 201 and matched filter 202. Delay section 201 delays the received signal by a predetermined time and sends the delayed signal to multiplication section 204.

Matched filter 202 carries out correlation value calculation processing using the midamble code section and the above-described cyclic basic code in the received signal, and thereby calculates a channel estimated value corresponding to each channel. Furthermore, applying a power calculation to the calculated channel estimated values obtains delay profiles as shown in FIG. 13. The calculated channel estimated values are sent to JD section 203.

FIG.13 is a schematic view showing an example of delay profiles created by the base station apparatus equipped with the reception apparatus according to Embodiment 1 of the present invention. As shown in FIG.13, the chip length of the reference block of the midamble pattern corresponds to the length of the W-chip section of the delay profile of the mobile station apparatus using this midamble pattern. For example, in the case of the mobile station apparatus using a midamble pattern of channel 4, the chip length of reference block "D" of this midamble pattern is "W4", and therefore a delay profile having a length of "W4" is created.

JD section 203 performs the following matrix calculation using the channel estimated values calculated by matched filter 202. That is, the length of the channel estimated value of each channel calculated by matched filter 202 is adjusted to the length of the longest channel estimated value (W7). More specifically, "0" is added to the end of channel estimated values of channels other than channel 7 as appropriate so that these estimated values have the same length as the length of the estimated value of channel 7. This is because, in this embodiment, the chip length of the reference block differs from one channel to another, as opposed to the conventional system in which the chip length of the reference block is common to all channels.

Then, by carrying out convolutional calculations between the channel estimated values whose length has been adjusted and spreading codes of data sections assigned to the respective channels, results (matrix) of convolutional calculations for the respective channels are obtained. Through these calculations, a matrix [A] is obtained in which the convolutional calculation results of the respective channels are regularly placed. Further, carrying out a matrix calculation shown in expression ① using system matrix [A] gives matrix [B] shown in expression ②. Matrix [B] obtained through such a matrix calculation is sent to multiplication section 204.

Multiplication section 204 carries out multiplication processing (that is, interference elimination demodulation processing) between the data section of the received signal from delay section 201 and the matrix from JD section 203 and obtains data stripped of interference for the respective channels. Thus, the base station apparatus recognizes ID numbers of the mobile station apparatuses that have requested for the start of a communication, and thereby accepts these mobile station apparatuses as the mobile station apparatuses with which to communicate.

After such a random access communication, the base station apparatus sends a signal indicating that these mobile station apparatuses have been accepted via a forward access channel as an FACH signal. This completes the explanation about how the base station apparatus equipped with the reception apparatus according to this embodiment operates.

Then, the effects of the mobile station apparatus equipped with the transmission apparatus according to this embodiment and the base station apparatus equipped with the reception apparatus according to this embodiment will be explained more specifically in two cases; one case where the mobile station apparatus carries out a random access communication for the first time and the other case where the mobile station apparatus carries out a random access communication for a second time.

First, the case where the mobile station apparatus carries out a random access communication for the first time will be explained. In the mobile station apparatus, transmit power determining section 100 calculates a propagation loss using the received information channel signal and determines a transmit power value based on this propagation loss. As described above, the propagation loss can be uses as an index to indicate the condition of the propagation path between the mobile station apparatus and base station apparatus. Furthermore, midamble pattern determination section 103 determines a reference block based on the transmit power value determined by transmit power determining section 100 and selects a midamble pattern having this reference block.

Therefore, it can be said that the midamble pattern determined by midamble pattern determining section 100 is selected taking into account the condition of the propagation path between the mobile station apparatus and base station apparatus.

More specifically, according to FIG.11, when the transmit power value is large (that is, a propagation loss during propagation between the mobile station apparatus and base station apparatus is large), a midamble pattern with a reference block of a large chip length is selected. That is, in this case, since the propagation delay of the RACH signal sent by the mobile station apparatus is estimated to increase, a midamble pattern with a reference block of a large chip length is selected to expand the W-chip section of the delay profile that can be created. This makes it possible to increase the probability that the delay profile of the mobile station apparatus will appear in the W-chip section corresponding to this mobile station apparatus. In other words, it is possible to decrease the probability that the delay profile of the mobile station apparatus will appear in the W-chip sections corresponding to other mobile station apparatuses.

On the contrary, when the transmit power value is small (that is, when a propagation loss during propagation between the mobile station apparatus and base station apparatus is small), a midamble pattern with a reference block of a small chip length is selected. That is, in this case, since the propagation delay of the RACH signal sent by the mobile station apparatus is estimated to decrease, a midamble pattern with a reference block of a small chip length is selected to reduce the W-chip section of the delay profile.

As described above, based on the transmit power value determined using the propagation loss, in other words, based on the condition of the propagation path between the mobile station apparatus and base station apparatus, a midamble pattern to be inserted into the RACH signal is selected so that the length of the W-chip section of the delay profile created by the base station apparatus exceeds the propagation delay. In the delay profile created by the base station apparatus, this makes it possible to increase the probability that the delay profile of a mobile station apparatus will appear in the expected W-chip section. Therefore, the base station apparatus can exactly extract channel estimated values corresponding to the respective mobile station apparatuses, and can thereby reduce the frequency with which RACH signals are retransmitted by the mobile station apparatuses.

Then, the case where the mobile station apparatus carries out a random access communication for a second time will be explained. For the above-described reason, this embodiment can reduce the frequency with which the mobile station apparatuses retransmit RACH signals. However, there are also cases where an RACH signal sent by a mobile station apparatus is not accepted by the base station apparatus and the mobile station apparatus resends the RACH signal.

Reasons for this can be: (1) Because the mobile station apparatus is located very far from the base station apparatus, the delay profile of this mobile station apparatus created by the base station apparatus does not appear in the expected W-chip section, (2) the transmit power value of the mobile station apparatus is too small with respect to the condition of the propagation path between the mobile station apparatus and base station apparatus, or (3) a mobile station has performed transmission using the same midamble as that of another mobile station apparatus simultaneously, causing the RACH signals to collide with each other, etc.

Thus, when the mobile station apparatus resends the RACH signal, transmit power determining section 100 further increases the transmit power value determined as described above according to the number of times the RACH signal is retransmitted. The increased transmit power value is sent to midamble pattern determining section 103 and radio section 104.

Midamble pattern determining section 103 determines a reference block based on the transmit power value increased by transmit power determining section 100 and selects a midamble pattern with this reference block. Furthermore, radio section 104 sends an RACH signal using the transmit power value increased by transmit power determining section 100.

Therefore, it can be said that the midamble pattern determined by midamble pattern determining section 103 has been selected taking into account not only the condition of the propagation path between the mobile station apparatus and base station apparatus but also the number of times the RACH signal is retransmitted.

More specifically, when the number of times RACH signals are retransmitted is large, a midamble pattern with a reference block of a larger chip length is selected and the RACH signal is transmitted with a larger transmit power value.

That is, in view that the propagation delay during transmission of the previous RACH signal exceeded the W-chip section of the delay profile, a midamble pattern having a reference block of a larger chip length is selected to expand the W-chip section of the delay profile. This makes it possible to increase the probability that the delay profile of the mobile station apparatus will appear in the W-chip section corresponding to this mobile station apparatus. At the same time, in view that the transmit power value of the previous RACH signal was too small with respect to the condition of the propagation path between the mobile station apparatus and base station apparatus, the transmit power value is also increased.

As described above, a midamble pattern to be inserted into the RACH signal is selected based on not only the condition of the propagation path between the mobile station apparatus and base station apparatus but also the number of times the RACH signal is retransmitted so that the length of the W-chip section of the delay profile created by the base station apparatus exceeds the propagation delay, and the transmit power value of the RACH signal is increased as well. This makes it possible to increase the probability that the delay profile of a certain mobile station apparatus will appear in the expected W-chip section in the delay profile created by the base station apparatus. Thus, the base station apparatus can exactly extract the channel estimated values corresponding to the respective mobile station apparatuses, and even if the RACH signal needs to be retransmitted for some reasons, it is possible to reduce the frequency with which the RACH signal is retransmitted thereafter by the mobile station apparatuses.

Thus, this embodiment selects a midamble pattern to be inserted into the RACH signal based on the condition of the propagation path between the mobile station apparatus and base station apparatus and the number of times the RACH signal is retransmitted so that the length of the W-chip section of the delay profile that can be created by the base station apparatus exceeds the propagation delay and increases the transmit power value of the RACH signal, and can thereby increase the probability that the delay profiles of the respective mobile station apparatuses will appear in the respective expected W-chip sections.

Furthermore, this embodiment uses a plurality of midamble patterns created using a basic code having a plurality of blocks with mutually different chip lengths and code contents, and can thereby prevent influences on the number of users that can be accommodated in JD and the transmission capacity.

Therefore, this embodiment can improve the probability that the communication terminal apparatus carrying out a random access communication will be accepted without affecting the number of communication terminal apparatuses that can be accommodated and transmission capacity.

In order to explain the most appropriate embodiment, this embodiment has described the case where a midamble pattern is set based on the condition of the propagation path and the number of times the RACH signal is retransmitted and the transmit power value of the RACH signals is set based on the condition of the propagation path and the number of times the RACH signal is retransmitted.

However, it goes without saying that even in the case where a midamble pattern is set based on either the condition of the propagation path or the number of times the RACH signal is retransmitted, it is possible to increase the probability that the delay profiles of the respective mobile station apparatuses will appear in their respective expected W-chip sections. In this case, it goes without saying that it is also possible to further improve the above probability by setting the transmit power value of an RACH signal based on at least one of the condition of the propagation path and RACH signal.

(Embodiment 2)

This embodiment will explain a case where when a delay profile of a certain mobile station apparatus according to Embodiment 1 does not appear in an expected W-chip section, deterioration of channel estimated values of other mobile station apparatuses will be prevented. The mobile station apparatus equipped with a transmission apparatus according to this embodiment and the base station apparatus equipped with a reception apparatus according to this embodiment will be explained below focused on differences from Embodiment 1 with reference to FIG.14 to FIG.16.

FIG.14 is a schematic view showing a procedure for creating midamble patterns used for mobile station apparatuses equipped with a transmission apparatus according to Embodiment 2 of the present invention. FIG.15 is a schematic view showing transmission timing of the mobile station apparatuses equipped with the transmission apparatus according to Embodiment 2 of the present invention. FIG.16 is a schematic view showing an example of delay profiles created by a base station apparatus equipped with a reception apparatus according to Embodiment 2 of the present invention.

The configurations of the mobile station apparatus equipped with the transmission apparatus according to this embodiment and the base station apparatus equipped with the reception apparatus according to this embodiment are the same as those according to Embodiment 1 except for the method of creating midamble patterns used, and therefore detailed explanations thereof will be omitted.

The method of creating midamble patterns to be assigned to the respective mobile station apparatuses will be explained with reference to FIG.14. In this embodiment, suppose the total number of midamble patterns is 8 as an example.

As shown in FIG.14, a midamble pattern used for each mobile station apparatus (channel) is created using a basic code that is repeated in a cycle of 456 chips (=8W) following the procedure shown below. This basic code includes 8 blocks "A" to "H" with mutually different codes and chip lengths and is known to the base station apparatus shown in FIG.9.

The basic code shown in FIG.14 is obtained by changing the basic code shown in FIG.10 as follows. That is, while the basic code shown in FIG.10 consists of blocks arranged in the order of "A" to "G" in such a way that the chip length increases from the 1st chip to the 456th chip, the basic code shown in FIG.14 consists of blocks arranged in the order of "A" to "H" so that a difference in a chip length between at least some adjacent blocks becomes as large as possible from the 1st chip to 456th chip. In other words, the basic code shown in FIG.14 includes a plurality of codes formed by a plurality of blocks with mutually different codes and code lengths (here codes "H", "D" to "F" "A" of a length of 456 chips).

As a first step, a reference block is set in the above-described basic code. Here, the reference block is assumed to be "A" as an example. As a second step, the phase of the above-described reference block is shifted leftward in the figure by 0, W1, W1+W6, ⋯, W1+W2+W3+W5+W6+W7, W1+W2+W3+W4+W5+W6+W7 (W1<W2<⋯ <W6<W7) for the respective channels (channels 1, 2, 3, ⋯, 7, 8). In this way, reference blocks of the respective channels (channels 1, 2, 3, ⋯, 7, 8) are "A", "F", "B", ⋯, "D", "H".

As a third step, for the respective channels, 512 chips are extracted from the leading section of the respective reference blocks whose phase has been shifted in the second step in the above basic code. Thus, a midamble pattern of 512 chips as a whole is created for each channel. FIG.14 shows midamble patterns of channels 1, 2, 3, 4 and 8.

Then, operations of the mobile station apparatus equipped with the transmission apparatus in the above configuration and the base station apparatus equipped with the reception apparatus in the above configuration during a random access communication will be explained.

The mobile station apparatus selects any one midamble pattern from a plurality of midamble patterns according to the content of the table shown in FIG.11 as in the case of Embodiment 1 and transmits an RACH signal with the selected midamble pattern inserted according to the frame shown in FIG.15.

The base station apparatus receives the RACH signal sent from the mobile station apparatus and creates a delay profile as in the case of Embodiment 1. At this time, an example of delay profiles created is shown in FIG.16. As is apparent from FIG. 16, the chip length of the reference block in the midamble pattern corresponds to the length of the W-chip section of the delay profile about the mobile station apparatus using this midamble pattern as in the case of Embodiment 1.

Then, the effects of the mobile station apparatus equipped with the transmission apparatus according to this embodiment and the base station apparatus equipped with the reception apparatus according to this embodiment will be explained using the delay profiles according to Embodiment 1 (FIG.13) in contrast to the delay profiles according to Embodiment 2 (FIG.16). Here, a case where mobile station apparatus 1 sends an RACH signal using a midamble pattern corresponding to channel 1 and the delay profile of mobile station apparatus 1 does not appear in the expected W-chip section at the base station apparatus will be explained as an example. In FIG.13 and FIG.16, suppose path 601 and path 602 are the paths in the delay profile of mobile station apparatus 1 (hereinafter simply referred to as "path of mobile station apparatus 1") and the phases of path 601 and path 602 are identical in FIG.13 and FIG. 16.

In FIG.13, path 601 and path 602 of mobile station apparatus 1 (channel 1) appear in the W-chip sections corresponding to channel 2 and channel 3. Thus, path 601 is detected as the channel estimated value of channel 2 and path 602 is detected as the channel estimated value of channel 3. As a result, not only the channel estimated value of channel 2 but also the channel estimated values of channel 2 and channel 3 degrade. Therefore, the interference elimination demodulation results of channels 1, 2 and 3 degrade.

On the other hand, in this embodiment, the above-described basic code consists of blocks "A" to "G" arranged so that a difference in a chip length between at least some adjacent blocks (for example, "A" and "F", "F" and "B", "B" and "G" and "G" and "C", etc.) becomes as large as possible. Thus, the length of the W-chip section corresponding to mobile station apparatus 1 (channel 1) using the midamble pattern with "A" as the reference block is "W1", while the length of the W-chip section corresponding to the mobile station apparatus (channel 2) using the midamble pattern with block "F" adjacent to "A" as the reference block is "W6".

Thus, in FIG.16, path 601 and path 602 of mobile station apparatus 1 (channel 1) only appear in the W-chip section corresponding to channel 2. Thus, path 601 and path 602 are detected as channel estimated values of channel 2. In this way, the channel estimated value of channel 2 degrades in the same way as Embodiment 1, whereas the channel estimated value of channel 3 does not degrade unlike Embodiment 1.

This embodiment describes the case where the mobile station apparatus sends an RACH signal using the midamble pattern corresponding to channel 1 as an example, but effects similar to those in the case above will also be obtained when the mobile station apparatus uses midamble patterns corresponding to other channels.

Here, when the mobile station apparatus uses a midamble pattern having a reference block of a large chip length (for example, "G"), this apparently produces inconvenience. That is, since the length of the chip section of W-chip section "5" adjacent to W-chip section "4" corresponding to this mobile station apparatus is small, if the propagation delay of the RACH signal sent from this mobile station apparatus is large as in the example above, the path corresponding to this mobile station apparatus seems to appear not only in W-chip section "5" but also in W-chip section "6". On the other hand, the length of W-chip section "4" corresponding to this mobile station apparatus itself is large, and it is less likely that the propagation delay produced as in the above example will exceed the sum total of W-chip section "4" and W-chip section "5".

Thus, according to this embodiment, midamble patterns are created so that the lengths of delay profiles of the respective channels become irregular, for example, a difference in the length of delay profile between at least some adjacent delay profiles becomes large. Furthermore, a midamble pattern to be inserted into an RACH signal is selected based on the condition of the propagation path between the mobile station apparatus and base station apparatus and the number of times the RACH signal is retransmitted so that the length of the W-chip section of the delay profile created by the base station apparatus exceeds the propagation delay and it is possible to increase the probability that the delay profiles of the respective mobile station apparatuses will appear in their respective expected W-chip sections by increasing the transmit power of the RACH signal.

Furthermore, the lengths of delay profiles between adjacent mobile station apparatuses vary even in the case where the mobile station apparatus that has carried out a random access communication is not accepted by the base station apparatus, and therefore it is possible to suppress the number of mobile station apparatuses that will be affected by the path corresponding to this mobile station apparatus. When the delay profile of a certain mobile station apparatus does not appear in the expected W-chip section, this makes it possible to prevent deterioration of channel estimated values about other mobile station apparatuses. Thus, it is possible to improve the probability that the mobile station apparatus will be accepted by the base station apparatus through a random access communication.

This embodiment has described the case using a basic code with blocks with mutually different chip lengths and codes arranged so that a difference in the chip length between at least some adjacent blocks becomes as large as possible. In other words, this embodiment has described the case where a plurality of midamble patterns is created so that the chip length of at least some adjacent blocks becomes as large as possible. However, the present invention is not limited to this, but is also applicable to a case where the procedure for creating a basic code or midamble pattern is changed under conditions under which the lengths of delay profiles between adjacent channels become irregular.

As described above, the present invention sets a known reference signal to be assigned to each communication terminal apparatus based on at least one of the condition of the propagation path and the number of times the random access channel signal is retransmitted, and can thereby improve the probability of successful random access communications without affecting the number of communication terminal apparatuses that can be accommodated and transmission capacity.

This application is based on the Japanese Patent Application No.2000-060155 filed on March 6, 2000, entire content of which is expressly incorporated by reference herein.

Industrial Applicability

The present invention is ideally applicable to a communication apparatus that cancels interference using matrix calculations in a CDMA-based communication, and more particularly, to the filed of a communication apparatus that cancels interference during a random access communication.

**Claims**

1. A transmission apparatus comprising:

   reference signal setting means for setting known reference signals to be inserted into random access channel signal based on the condition of propagation path; and
   transmitting means for transmitting the random access channel signal in which the set known reference signals and information on a request for the start of a communication are inserted.

2. A transmission apparatus comprising:

   reference signal setting means for setting known reference signals to be inserted into random access channel signal based on the number of times the random access channel signal is retransmitted; and
   transmitting means for transmitting the random access channel signal in which the set known reference signals and information on a request for the start of a communication are inserted.

3. The transmission apparatus according to claim 1, wherein the reference signal setting means uses any one of known reference signals created by extracting a predetermined length from the leading section of each block of a reference signal having a plurality of codes formed by sequentially placing a plurality of blocks with mutually different codes and code lengths according to said code lengths, as a known reference signal to be inserted in the random access channel signal.

4. The transmission apparatus according to claim 2, wherein the reference signal setting means uses any one of known reference signals created by extracting a predetermined length from the leading section of each block of a reference signal having a plurality of codes formed by sequentially placing a plurality of blocks with mutually different codes and code lengths according to said code lengths, as a known reference signal to be inserted in the random access channel signal.

5. The transmission apparatus according to claim 1, wherein the reference signal setting means uses any one of known reference signals created by extracting a predetermined length from the leading section of each block of a reference signal having a plurality of codes formed by irregularly and sequentially placing a plurality of blocks with mutually different codes and code lengths, as a known reference signal to be inserted in the random access channel signal.

6. The transmission apparatus according to claim 2, wherein the reference signal setting means uses any one of known reference signals created by extracting a predetermined length from the leading section of each block of a reference signal having a plurality of codes formed by irregularly and sequentially placing a plurality of blocks with mutually different codes and code lengths, as a known reference signal to be inserted in the random access channel signal.

7. The transmission apparatus according to claim 5, wherein the reference signal setting means uses a second reference code having a plurality of codes formed by sequentially placing a plurality of blocks with mutually different codes and code lengths so that the code length between at least some adjacent blocks increases, as a reference code.

8. The transmission apparatus according to claim 6, wherein the reference signal setting means uses a second reference code having a plurality of codes formed by sequentially placing a plurality of blocks with mutually different codes and code lengths so that the code length between at least some adjacent blocks increases, as a reference code.

9. The transmission apparatus according to claim 1, further comprising power value setting means for setting a transmit power value based on at least one of the condition of the propagation path or the number of times the random access channel signal is retransmitted, wherein the transmitting means controls the transmission of said random access signal using the set transmit power value.

10. The transmission apparatus according to claim 2, further comprising power value setting means for setting a transmit power value based on at least one of the condition of the propagation path or the number of times the random access channel signal is retransmitted, wherein the transmitting means controls the transmission of said random access signal using the set transmit power value.

11. A reception apparatus comprising:

receiving means for receiving a random access channel signal sent from a transmission apparatus;
calculating means for calculating a channel estimated value by calculating a correlation value using the received signal and a reference signal;
joint detection calculating means for calculating joint detection using the calculated channel estimated value; and
demodulating means for extracting information on a request for the start of a communication from said transmission apparatus by carrying out demodulation processing using the result of said joint detection calculation and said received signal,

wherein said transmission apparatus comprises reference signal setting means for setting known reference signals to be inserted into the random access channel signal based on the condition of the propagation path; and transmitting means for transmitting the random access channel signal in which the set known reference signals and information on a request for the start of a communication are inserted.

12. A reception apparatus comprising:

receiving means for receiving a random access channel signal sent from a transmission apparatus;
calculating means for calculating a channel estimated value by calculating a correlation value using the received signal and a reference signal;
joint detection calculating means for calculating joint detection using the calculated channel estimated value; and
demodulating means for extracting information on a request for the start of a communication from said transmission apparatus by carrying out demodulation processing using the result of said joint detection calculation and said received signal,

wherein said transmission apparatus comprises reference signal setting means for setting known reference signals to be inserted into the random access channel signal based on the number of times the random access channel signal is retransmitted; and
transmitting means for transmitting the random access channel signal in which the set known reference signals and information on a request for the start of a communication are inserted.

13. A communication terminal apparatus equipped with a transmission apparatus, said transmission apparatus comprising:

reference signal setting means for setting known reference signals to be inserted into a random access channel signal based on the condition of the propagation path; and
transmitting means for transmitting the random access channel signal in which the set known reference signals and information on a request for the start of a communication are inserted.

14. A communication terminal apparatus equipped with a transmission apparatus, said transmission apparatus comprising:

reference signal setting means for setting known reference signals to be inserted into a random access channel signal based on the number of times the random access channel signal is retransmitted; and
transmitting means for transmitting the random access channel signal in which the set known reference signals and information on a request for the start of a communication are inserted.

**15.** A base station apparatus equipped with a reception apparatus comprising:

receiving means for receiving a random access channel signal sent from a transmission apparatus;

calculating means for calculating a channel estimated value by calculating a correlation value using the received signal and a reference signal;

joint detection calculating means for calculating joint detection using the calculated channel estimated value; and

demodulating means for extracting information on a request for the start of a communication from said transmission apparatus by carrying out demodulation processing using the result of said joint detection calculation and said received signal,

wherein said transmission apparatus comprises reference signal setting means for setting known reference signals to be inserted into the random access channel signal based on the condition of the propagation path and transmitting means for transmitting the random access channel signal in which the set known reference signals and information on a request for the start of a communication are inserted.

**16.** A base station apparatus equipped with a reception apparatus comprising:

receiving means for receiving a random access channel signal sent from a transmission apparatus;

calculating means for calculating a channel estimated value by calculating a correlation value using the received signal and a reference signal;

joint detection calculating means for calculating joint detection using the calculated channel estimated value; and

demodulating means for extracting information on a request for the start of a communication from said transmission apparatus by carrying out demodulation processing using the result of said joint detection calculation and said received signal,

wherein said transmission apparatus comprises reference signal setting means for setting known reference signals to be inserted into the random access channel signal based on the number of times the random access channel signal is retransmitted and transmitting means for transmitting the random access channel signal in which the set known reference signals and information on a request for the start of a communication are inserted.

**17.** A transmission method comprising:

a reference signal setting step of setting known reference signals to be inserted into a random access channel signal based on the condition of the propagation path; and

a transmitting step of transmitting the random access channel signal in which the set known reference signals and information on a request for the start of a communication are inserted.

**18.** A transmission method comprising:

a reference signal setting step of setting known reference signals to be inserted into the random access channel signal based on the number of times a random access channel signal is retransmitted; and

a transmitting step of transmitting the random access channel signal in which the set known reference signals and information on a request for the start of a communication are inserted.

**19.** The transmission method according to claim 17, further comprising a power value setting step of setting a transmit power value based on at least one of the condition of the propagation path or the number of times the random access channel signal is retransmitted, wherein the transmitting step controls the transmission of said random access signal using the set transmit power value.

**20.** The transmission method according to claim 18, further comprising a power value setting step of setting a transmit power value based on at least one of the condition of the propagation path or the number of times the random access channel signal is retransmitted, wherein the transmitting step controls the transmission of said random access signal using the set transmit power value.

|←—— 456 CHIPS ——→|←—— 456 CHIPS ——→|

BASIC CODE | H | G | F | E | D | C | B | A | H | G | F | E | D | C | B | A |

|←————— 512 CHIPS —————→|

MIDAMBLE PATTERN
OF CHANNEL 1 | A' | H | G | F | E | D | C | B | A |

$W_1$

MIDAMBLE PATTERN
OF CHANNEL 2 | B' | A | H | G | F | E | D | C | B |

$W_2$

MIDAMBLE PATTERN
OF CHANNEL 3 | C' | B | A | H | G | F | E | D | C |

2W

⋮

$W_7$

MIDAMBLE PATTERN
OF CHANNEL 8 | H' | G | F | E | D | C | B | A | H |

7W

FIG.1

| | DATA SECTION 1 | MIDAMBLE SECTION 512 CHIPS | | | | | | | | | DATA SECTION 2 |
|---|---|---|---|---|---|---|---|---|---|---|---|
| TRANSMISSION SIGNAL OF CHANNEL 1 | DATA11 | A' | H | G | F | E | D | C | B | A | DATA12 |
| TRANSMISSION SIGNAL OF CHANNEL 2 | DATA21 | B' | A | H | G | F | E | D | C | B | DATA22 |
| TRANSMISSION SIGNAL OF CHANNEL 3 | DATA31 | C' | B | A | H | G | F | E | D | C | DATA32 |
| | | | | | | ⋮ | | | | | |
| TRANSMISSION SIGNAL OF CHANNEL 8 | DATA81 | H' | G | F | E | D | C | B | A | H | DATA82 |

TIME →

FIG.2

EP 1 176 739 A1

MIDAMBLE SECTION WITH NO
PROPAGATION DELAY

512 CHIPS

456 CHIPS

CHANNEL 1 | DATA11 | A' | H | G | F | E | D | C | B | A | DATA12

PROPAGATION DELAY 1 →

CHANNEL 2 | DATA21 | B' | A | H | G | F | E | D | C | B | DATA22

PROPAGATION DELAY 2 →

CHANNEL 3 | DATA31 | C' | B | A | H | G | F | E | D | C | DATA32

PROPAGATION DELAY 3 →

CHANNEL 8 | DATA81 | H' | G | F | E | D | C | B | A | H | DATA82

PROPAGATION DELAY 8 →

TIME

FIG.3

RECEIVED
SIGNAL → 11 DELAYER

12 MF → 13 JOINT DETECTION SECTION → 14 MULTIPLICATION SECTION → DEMODULATED DATA

FIG.4

W(=57) CHIPS

CYCLIC PATTERN | A | B | C | D | E | F | G | H | A | B | C | D | E | F | G | H |

CHANNEL 1

456CHIPS

PROPAGATION DELAY 1

CHANNEL 2

456CHIPS

PROPAGATION DELAY 2

CHANNEL 3

456CHIPS

PROPAGATION DELAY 3

CHANNEL 8

456CHIPS

PROPAGATION DELAY 8

1 | 2 | 3 | 4 | 5 | 6 | 7 | 8

CHANNEL ESTIMATED VALUE

SECTION IN WHICH DELAY PROFILE OF
EACH CHANNEL n APPEARS

FIG.5

MIDAMBLE SECTION WHEN THERE IS
NO PROPAGATION DELAY

512 CHIPS

456 CHIPS

CHANNEL 1 | DATA11 | A'| H | G | F | E | D | C | B | A | DATA12

PROPAGATION DELAY 1

CHANNEL 2 | DATA21 | B'| A | H | G | F | E | D | C | B | DATA22

PROPAGATION DELAY 2

CHANNEL 3 | DATA31 | C'| B | A | H | G | F | E | D | C | DATA32

PROPAGATION DELAY 3

CHANNEL 8 | DATA81 | H'| G | F | E | D | C | B | A | H | DATA82

PROPAGATION DELAY 8

TIME

FIG.6

EP 1 176 739 A1

FIG.7

W(=57) CHIPS

CYCLIC PATTERN | A | B | C | D | E | F | G | H | A | B | C | D | E | F | G | H |

CHANNEL 1

456CHIPS

PROPAGATION DELAY 1

CHANNEL 2

456CHIPS

PROPAGATION DELAY 2

CHANNEL 3

456CHIPS

PROPAGATION DELAY 3

CHANNEL 8

456CHIPS

PROPAGATION DELAY 8

1 | 2 | 3 | 4 | 5 | 6 | 7 | 8

CHANNEL ESTIMATED VALUE

FIG.7

DATA → | SPREADING SECTION | 101

| MIDAMBLE PATTERN DETERMINING SECTION | 103

| TIME MULTIPLEXING SECTION | 102

| RADIO SECTION | 104

105

| TRANSMIT POWER DETERMINING SECTION | 100

FIG.8

| DELAYER | 201

RECEIVED SIGNAL

| MF | 202

| JOINT DETECTION SECTION | 203

| MULTIPLICATION SECTION | 204

DEMODULATED DATA

FIG.9

EP 1 176 739 A1

456 CHIPS | 456 CHIPS

BASIC CODE | H | G | F | E | D | C | B | A | H | G | F | E | D | C | B | A

512 CHIPS

MIDAMBLE PATTERN OF CHANNEL 1 | A | H | G | F | E | D | C | B | A

$W_1$

MIDAMBLE PATTERN OF CHANNEL 2 | B | A | H | G | F | E | D | C | B

$W_2$

MIDAMBLE PATTERN OF CHANNEL 3 | C | B | A | H | G | F | E | D | C

$W_3$

MIDAMBLE PATTERN OF CHANNEL 4 | D' | C | B | A | H | G | F | E | D

$W_7$

MIDAMBLE PATTERN OF CHANNEL 8 | H | G | F | E | D | C | B | A | H

$W_1+W_2+W_3+W_4+W_5+W_6+W_7$

FIG.10

EP 1 176 739 A1

| TRANSMIT POWER VALUE | P1 | P2 | P3 | P4 | P5 | P6 | P7 | P8 |
|---|---|---|---|---|---|---|---|---|
| REFERENCE BLOCK | A | B | C | D | E | F | G | H |

.

## FIG.1 1

.

| | DATA SECTION 1 | MIDAMBLE SECTION 512CHIPS | DATA SECTION 2 |
|---|---|---|---|
| TRANSMISSION SIGNAL OF CHANNEL 1 | DATA11 | A H G F E D C B A | DATA12 |
| TRANSMISSION SIGNAL OF CHANNEL 2 | DATA21 | B A H G F E D C B | DATA22 |
| TRANSMISSION SIGNAL OF CHANNEL 3 | DATA31 | C B A H G F E D C | DATA32 |
| TRANSMISSION SIGNAL OF CHANNEL 4 | DATA41 | D' C B A H G F E D | DATA42 |
| TRANSMISSION SIGNAL OF CHANNEL 8 | DATA81 | H G F E D C B A H | DATA82 |

TIME

## FIG.12

23

EP 1 176 739 A1

FIG.13

EP 1 176 739 A1

BASIC CODE

| 456 CHIPS | 456 CHIPS |
|---|---|

| H | D | E | C | G | B | F | A | H | D | E | C | G | B | F | A |

MIDAMBLE PATTERN
OF CHANNEL 1

512 CHIPS

| A | H | D | E | C | G | B | F | A |

$W_1$

MIDAMBLE PATTERN
OF CHANNEL 2

| F | A | H | D | E | C | G | B | F |

$W_6$

MIDAMBLE PATTERN
OF CHANNEL 3

| B | F | A | H | D | E | C | G | B |

$W_2$

MIDAMBLE PATTERN
OF CHANNEL 4

| G | B | F | A | H | D | E | C | G |

MIDAMBLE PATTERN
OF CHANNEL 8

| H | D | E | C | G | B | F | A | H |

$W_1 + W_2 + W_3 + W_4 + W_5 + W_6 + W_7$

FIG.14

| | DATA SECTION 1 | MIDAMBLE SECTION 512CHIPS | DATA SECTION 2 |
|---|---|---|---|
| TRANSMISSION SIGNAL OF CHANNEL 1 | DATA11 | A H D E C G B F A | DATA12 |
| TRANSMISSION SIGNAL OF CHANNEL 2 | DATA21 | F' A H D E C G B F | DATA22 |
| TRANSMISSION SIGNAL OF CHANNEL 3 | DATA31 | B F A H D E C G B | DATA32 |
| TRANSMISSION SIGNAL OF CHANNEL 4 | DATA41 | G'B F A H D E C G | DATA42 |
| | | ⋮ | |
| TRANSMISSION SIGNAL OF CHANNEL 8 | DATA81 | H D E C G B F A H | DATA82 |

→ TIME

FIG.15

EP 1 176 739 A1

CYCLIC PATTERN

$W_1$ $W_6$ $W_2$ $W_7$ $W_3$ $W_5$ $W_4$ $W_8$

A F B G C E D H A F B G C E D H

1 2 3 4 5 6 7 8

601 602

FIG.16

# EP 1 176 739 A1

## INTERNATIONAL SEARCH REPORT

| | |
|---|---|
| | International application No. |
| | PCT/JP01/01458 |

**A. CLASSIFICATION OF SUBJECT MATTER**
Int.Cl⁷ H04B7/26

According to International Patent Classification (IPC) or to both national classification and IPC

**B. FIELDS SEARCHED**

Minimum documentation searched (classification system followed by classification symbols)
Int.Cl⁷ H04B7/24-7/26, 102, H04Q7/00-7/38

Documentation searched other than minimum documentation to the extent that such documents are included in the fields searched
Jitsuyo Shinan Koho          1922-1996    Toroku Jitsuyo Shinan Koho  1994-2001
Kokai Jitsuyo Shinan Koho   1971-2001    Jitsuyo Shinan Toroku Koho  1996-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | Klein A, Kaleh G.K., Baier P.W., "Zero Forcing and Minimum Mean-Square-Error Equalization for Multiuser Detection in Code-Division Multiple-Access Channels", IEEE Trans. Vehicular Technology, Vol.45, No.2, May, 1996 | 1-20 |
| A | JP, 2000-31870, A (Lucent Technologies Inc.), 28 January, 2000 (28.01.00) & EP, 952711, A2    & US, 6144710, A | 1-20 |

| | | | |
|---|---|---|---|
| ☐ | Further documents are listed in the continuation of Box C. | ☐ | See patent family annex. |

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15 May, 2001 (15.05.01) | 29 May, 2001 (29.05.01) |

| Name and mailing address of the ISA/ | Authorized officer |
|---|---|
| Japanese Patent Office | |
| Facsimile No. | Telephone No. |

Form PCT/ISA/210 (second sheet) (July 1992)

28